# EUROPÄISCHE PATENTSCHRIFT

(11) **EP 3 347 778 B1**
(45) Veröffentlichungstag und Bekanntmachung des Hinweises auf die Patenterteilung: **16.12.2020**
(21) Anmeldenummer: 16770900.5
(22) Anmeldetag: 07.09.2016
(51) Int. Cl.: G05B 19/408

(54) **VORRICHTUNG UND VERFAHREN ZUM BEHANDELN VON BEHÄLTNISSEN MIT RÜCKFRAGENDEN BEHANDLUNGSEINRICHTUNGEN**
APPARATUS AND METHOD FOR PROCESSING CONTAINERS HAVING QUERYING PROCESSING DEVICES
DISPOSITIF ET PROCÉDÉ DE TRAITEMENT DE RÉCIPIENTS AVEC DES DISPOSITIFS DE TRAITEMENT INTERROGATEURS

(30) Priorität: 07.09.2015 DE 102015114947
(43) Veröffentlichungstag der Anmeldung: 18.07.2018
(73) Patentinhaber: KRONES AG, 93073 Neutraubling (DE)
(72) Erfinder: GSCHREY, Andreas, 93073 Neutraubling (DE); HENSEL, Thomas, 93073 Neutraubling (DE); HUPPELSBERG, Falk, 93073 Neutraubling (DE)
(74) Vertreter: Bittner, Bernhard
(86) Internationale Anmeldenummer: PCT/EP2016/071117
(87) Internationale Veröffentlichungsnummer: WO 2017/042234

(56) Entgegenhaltungen:
- DE-A1-102010 033 171
- US-A1- 2003 022 396
- US-A1- 2005 235 230
- US-A1- 2014 237 944

## Beschreibung

Die vorliegende Erfindung bezieht sich auf eine Vorrichtung und ein Verfahren zum Behandeln von Behältnissen. Aus dem Stand der Technik sind zahlreiche Vorrichtungen dieser Art bekannt, wie beispielsweise Füllmaschinen, Etikettiermaschinen, Blasformmaschinen und dergleichen. Darüber hinaus sind aus dem Stand der Technik auch Anlagen bekannt, welche eine Vielzahl von unterschiedlichen Maschinen aufweisen, beispielsweise einen Block aus einer Blasformmaschine, einen nachgeordneten Füller und einer Etikettiermaschine. Die vorliegende Erfindung bezieht sich insbesondere auf derartige Anlagen.

Beim Betrieb derartiger Anlagen kommt es des Öfteren vor, dass Produktsorten gewechselt werden müssen; dies ist beispielsweise in der Offenlegungsschrift DE 10 2010 033 171 A1 beschrieben. In diesem Falle werden bei einem Produktwechsel an jeder einzelnen Maschine die neuen Parameter einzeln eingestellt. Daneben ist im internen Stand der Technik der Anmelderin auch eine Maschine bekannt, bei der diese Parametereinstellung jeder Maschine über eine zentrale Stelle (beispielsweise einen Touch einer bestimmten Maschine) für alle Maschinen erfolgt. Allerdings muss auch hier für jede einzelne Maschine ein kompletter Parametersatz mit allen Werten vollständig eingegeben werden. Diese Vorgehensweise ist eine relativ langwierige Prozedur und erfordert darüber hinaus auch bei dem Benutzer eine sehr hohe Konzentration.

Der vorliegenden Erfindung liegt daher die Aufgabe zugrunde, eine Maschine zur Verfügung zu stellen, welche eine derartige Parametrierung erleichtert. Daneben soll auch der zeitliche

Aufwand für eine derartige Parametrierung gesenkt werden. Diese Aufgaben werden erfindungsgemäß durch die Gegenstände der unabhängigen Patentansprüche erreicht.

Vorteilhafte Ausführungsformen und Weiterbildungen sind Gegenstand der Unteransprüche.

Bei einem erfindungsgemäßen Verfahren zum Behandeln von Behältnissen werden Behältnisse mittels einer ersten Behandlungseinrichtung in einer ersten vorgegebenen Weise behandelt, und mittels einer Transporteinrichtung zu einer zweiten Behandlungseinrichtung transportiert und von dieser zweiten Behandlungseinrichtung in einer zweiten vorgegebenen Weise behandelt. Dabei werden diese Behandlungseinrichtungen jeweils von wenigstens einer Steuerungseinrichtung gesteuert, wobei zur Steuerung Parameter verwendet werden, welche für die Behältnisse und/oder Behandlung der Behältnisse charakteristisch sind.

Erfindungsgemäß werden Vorgabeparameter an wenigstens eine und bevorzugt an eine Vielzahl der Steuerungseinrichtungen ausgegeben, und diese ausgegebenen Vorgabeparameter werden mit von wenigstens einer Behandlungseinrichtung benötigten Parametern verglichen und es wird geprüft, ob die von der wenigstens einen Behandlungseinrichtung benötigten Parameter zumindest aus den Vorgabeparametern ableitbar und bevorzugt in diesen enthalten sind.

Es wird daher ein Verfahren vorgeschlagen, welches es erlaubt, dass nicht mehr notwendigerweise für alle Maschinen die vollständigen Parametersätze eingegeben werden müssen. So werden über eine Hauptsteuerungseinrichtung bestimmte Parameter eingegeben. Diese Parameter werden auch an die einzelnen Steuerungseinrichtungen der Behandlungseinrichtungen weitergegeben. Bei den Parametern handelt es sich, wie unten noch genauer erläutert wird, bevorzugt um Behältnisparameter oder Arbeitsparameter.

Im Folgenden wird diejenige Steuerungseinrichtung, welche die Vorgabeparameter ausgibt als Hauptsteuerungseinrichtung oder als Leitsteuerungseinrichtung bezeichnet. Die Steuerungseinrichtung(en) welche die Vorgabeparameter annehmen bzw. an welche die Vorgabeparameter ausgegeben werden, werde im Folgenden als Folgesteuerungseinrichtungen bezeichnet. Bevorzugt dienen diese Steuerungseinrichtungen zum Steuern der einzelnen Behandlungseinrichtungen. Auch die Hauptsteuerungseinrichtung kann zur Steuerung einer bestimmten Behandlungseinrichtung dienen, wie etwa einer Füllmaschine, es wäre jedoch auch denkbar, dass die Hauptsteuerungseinrichtung eine übergeordnete Anlagensteuerungseinrichtung ist und nicht speziell einer bestimmten Behandlungseinrichtung zugewiesen ist.

Die Folgesteuerungseinrichtungen oder auch die Hauptsteuerungseinrichtung(en) prüfen, ob diese Vorgabeparameter für die jeweilige Behandlungseinrichtung vollständig sind, d. h. ob auf Basis der Vorgabeparameter eine vollständige Parametrierung der jeweiligen Behandlungseinrichtung erfolgen kann. Bevorzugt kommunizieren daher wenigstens die Steuerungseinrichtung, in welche die Parameter eingegeben werden, und die Folgesteuerungseinrichtungen der einzelnen Behandlungseinrichtungen. Es wird daher vorgeschlagen, dass die einzelnen Behandlungseinrichtungen bzw. deren Steuerungseinrichtungen als "wissbegierige" und/oder "selbstparametrierende" Steuerungen ausgeführt sind.

Diese Steuerungseinrichtungen können miteinander kommunizieren und so ggfs. über neue Parametereingaben abstimmen. Im Rahmen der hier erwähnten Kommunikation zwischen den Behandlungseinrichtungen und insbesondere deren Steuerungseinrichtungen werden insbesondere Parameter übermittelt und insbesondere für den Betrieb der einzelnen Behandlungseinrichtungen relevante Parameter übermittelt. Dabei ist es möglich, dass die Hauptsteuerungseinrichtung jeweils mit allen weiteren (Folge)Steuerungseinrichtungen kommuniziert und/oder Daten an diese ausgibt, es wäre jedoch auch (alternativ oder zusätzlich) möglich, dass auch die Folgesteuerungseinrichtungen untereinander kommunizieren.

Falls beispielsweise ein Bediener an einer Fülleinrichtung als Parameter eingibt:
Sortenwechsel in 20 Min., neue Geschwindigkeit: 35.000 Flaschen/h, neue Flaschengröße: 1,5 I, neuer Flaschendurchmesser: 70 mm,
ist es möglich dass diese Parameter an alle weiteren vorhandenen Behandlungseinrichtungen (und insbesondere deren Steuerungseinrichtungen) der gesamten Anlage übermittelt werden. Jede einzelne Behandlungseinrichtung sammelt bevorzugt für sich genommen Information und überprüft ob und ggfs. welche zusätzliche Information nötig ist.

Erst dann übermittelt die entsprechende Folgesteuerungseinrichtung an die initiierende Maschine (insbesondere an die Hauptsteuerungseinrichtung) eine bestimmte Anfrage über noch nicht vorhandene Informationen. Beispielsweise hat eine Fülleinrichtung die obigen Informationen an die Blasformmaschine geschickt. Die Blasformmaschine antwortet, dass die Daten entgegengenommen wurden und stellt zusätzlich die Anfrage, dass der Bediener beispielsweise noch eine Preform-Temperatur und eine Behältnishöhe angeben sollte. Die Hauptsteuerungseinrichtung leitet diese Frage an den Nutzer weiter und der Benutzer gibt die entsprechende Eingabe ein. Wiederum wird bevorzugt die Antwort, d. h. die neueingegebenen Daten an alle weiteren Maschinen weiterverteilt. Auf diese Weise ist es möglich, dass einzelne Maschinen bereits sämtliche Daten zur Verfügung gestellt bekommen, ohne selbst die Daten anfordern zu müssen und insbesondere ohne dass der Benutzer diese für die konkrete Maschine eingeben muss.

Bei einem weiteren Verfahren wäre es auch möglich, dass die Anlage mehrere Behandlungseinrichtungen aufweist und jede einzelne eine entsprechende Anfrage an die Hauptsteuerungseinrichtung stellt. Diese kann auf Basis der Anfrage ermitteln, welche Daten noch einzugeben sind. Falls beispielsweise die Behältnishöhe von zwei Maschinen angefragt wird, genügt lediglich die einmalige Angabe dieses Parameters.

Bei einer weiteren vorteilhaften Variante werden die Vorgabeparameter durch einen Benutzer eingegeben. Dies kann beispielsweise über ein Eingabemittel wie eine Tastatur oder ein Touchscreen vorgenommen werden.

Bei einem weiteren vorteilhaften Verfahren kommuniziert die Hauptsteuerungseinrichtung bzw. Leitsteuerungseinrichtung mit den Folgesteuerungseinrichtungen. Auch wäre es möglich, dass die Folgesteuerungseinrichtungen miteinander kommunizieren können. Unter der Leitsteuerung wird im Folgenden insbesondere diejenige Steuerungseinrichtung verstanden, über welche die Parameter vorgegeben werden. Dies kann beispielsweise die Steuerungseinrichtung einer der Behandlungseinrichtungen sein, etwa die Steuerungseinrichtung einer Fülleinrichtung oder einer Blasformmaschine.

Bei einem weiteren bevorzugten Verfahren wird ein Maschinenstart verhindert, falls noch nicht alle von den einzelnen Behandlungseinrichtungen benötigten Parameter eingegeben wurden. Um dies zu erreichen, kann beispielsweise jede einzelne Folgesteuerungseinrichtung die ihr bereits zur Verfügung stehenden Daten mit den benötigten Daten vergleichen. Bei einem weiteren bevorzugten Verfahren wird wenigstens ein Parameter durch Messung bestimmt. So wäre es beispielsweise möglich, dass der Benutzer ein (Muster)Behältnis an eine Messeinrichtung übergibt und diesen anhand dieses (Muster)behältnisses bestimmten Parameter ermittelt. Es wäre jedoch auch möglich, dass zur Eingabe der Parameter Markierungen, wie beispielsweise Farbcodes, QR-Codes oder RFID-Tags eingelesen werden.

Bei einem weiteren bevorzugten Verfahren werden benötigte Parameter, welche nicht aus den Vorgabeparametern ableitbar sind, angefragt. Insbesondere werden derartige benötigte Parameter von einer Folgesteuerungseinrichtung angefragt. So kann beispielsweise die Folgesteuerungseinrichtung feststellen, dass hier noch nicht alle für ihren Betrieb nötigen Parameter zur Verfügung stehen und diese kann diese fehlenden Parameter wiederum von der Hauptsteuerungseinrichtung anfragen.

Dabei ist es möglich, dass die noch benötigten Parameter an den Benutzer über eine Anzeigeeinrichtung wie etwa ein Display ausgegeben werden. Dabei wäre es auch möglich, dass gleichzeitig an den Benutzer die bereits eingegebenen Parameter ausgegeben werden, sodass dieser einen schnellen Vergleich durchführen kann und insbesondere feststellen kann, welche Parameter noch einzugeben sind.

Bei einem weiteren Verfahren wäre es auch möglich, dass die Folgesteuerungseinrichtung anfragt, ob alte Parameter bzw. vorhergehende Parameter verwendet werden können. So ist es denkbar, dass bei einer Sortenumstellung nicht alle Parameter geändert werden, beispielsweise wenn von einem Behältnis einer bestimmten Höhe auf ein anderes Behältnis mit jedoch der gleichen Höhe umgestellt wird. In diesem Falle wäre es auch möglich, dass seitens des Benutzers oder der Hauptsteuerungseinrichtung die Information vorgegeben wird, dass auf bekannte Parameter zurückgegriffen werden kann. Auch wäre es möglich, dass die Folgesteuerungseinrichtung Vorschläge für auszuwählende Parameter unterbreitet, etwa wenn sich aus den Vorgabeparametern ermitteln lässt, dass eines von drei möglichen Behältnissen gefertigt werden soll. In diesem Falle können die fehlenden Parameter für das mögliche zukünftige Behältnis verwendet werden und/oder es kann dem Benutzer eine Auswahl für mögliche Parameter vorgegeben werden.

Bei einem weiteren Verfahren ist es auch möglich, dass die Folgesteuerungseinrichtung selbst fehlende Parameter ermittelt. So wäre es beispielsweise möglich, dass eine bestimmte Anlage stets mit z.B. drei verschiedenen Behältnissorten betrieben wird. Falls nun ein Sortenwechsel eingeleitet wird und durch den Benutzer bereits einige Parameter eingegeben wurden, kann die Folgesteuerung bereits aus dem noch nicht vollständig eingegebenen Parametersatz ermitteln, auf welche Sorte umgestellt werden soll. In diesem Falle kann die Folgesteuerungseinrichtung die noch fehlenden Parameter ergänzen, da diese noch aus früheren Behandlungen bekannt sind. Auch kann in einem derartigen Fall bevorzugt die Folgesteuerungseinrichtung Vorschläge für die fehlenden Parameter ausgeben, die der Benutzer nur noch bestätigen muss. Bevorzugt ermittelt daher die Folgesteuerungseinrichtung und/oder die Hauptsteuerungseinrichtung fehlende Parameter selbst aus den Vorgabeparametern ermitteln, insbesondere auf Basis früher verwendeter und/oder bereits abgespeicherter Daten bzw. Parameter.

Bei einem weiteren vorteilhaften Verfahren wird anhand der Vorgabeparameter eine zu wechselnde Sorte identifiziert. Diese Identifizierung kann dabei insbesondere auch erfolgen, wenn die Vorgabeparameter nicht vollständig sind d.h. nicht alle von der jeweiligen Steuerungseinrichtung benötigten Parameter enthalten.

Bevorzugt werden die Vorgabeparameter in einer Speichereinrichtung der Folgesteuerungseinrichtung gespeichert. Bevorzugt ist auch in der Folgesteuerungseinrichtung, beispielsweise der Speichereinrichtung der Folgesteuerungseinrichtung hinterlegt, welche Parameter für den Betrieb der von dieser Folgesteuerungseinrichtung gesteuerten Behandlungseinrichtung benötigt werden.

Bevorzugt wird das hier vorgeschlagene Verfahren bei einer Sortenumstellung verwendet, d. h. insbesondere wenn in einem Betrieb von einer bestimmten Sorte Behältnis und/oder Getränk auf eine andere Sorte Behältnis und/oder Getränk umgestellt werden soll.

Bei einem weiteren bevorzugten Verfahren werden angefragte Parameter an mehrere und bevorzugt an alle Behandlungseinrichtungen bzw. deren Steuerungseinrichtungen ausgegeben. Auf diese Weise kann, wie oben erwähnt, sehr schnell ein vollständiger Satz an allen benötigten Parametern erreicht bzw. zur Verfügung gestellt werden.

Bei einem weiteren bevorzugten Verfahren werden die Vorgabeparameter zur Durchführung eines Behandlungswechsels und insbesondere eines Sortenwechsels ausgegeben. Bei einem Sortenwechsel handelt es sich insbesondere um eine Umstellung auf andere Behältnisse, andere Getränke oder auch andere Ausstattungen, beispielsweise Etiketten oder Verschlüsse. Bei einem Behandlungswechsel kann es sich beispielsweise um eine Umstellung handeln, bei der möglicherweise einzelne Behandlungsaggregate in einem anderen Arbeitsmodus betrieben werden oder durch andere Behandlungsaggregate ersetzt werden. So kann beispielsweise von einer Herstellung von Behältnissen, welche eine Sterilisation benötigen auf die Herstellung von Behältnissen, welche diese Sterilisation nicht benötigen, umgestellt werden. Auch kann ein derartiger Behandlungswechsel durch Austausch eines bestimmten Aggregats durch ein anderes Aggregat erfolgen.

Hingegen wird im Folgenden unter einem Behandlungs- oder Sortenwechsel nicht verstanden, wenn ein lediglich defektes Bauteil durch ein anderes (intaktes) Bauteil ersetzt wird. Allgemein wird unter einem Behandlungs- oder Sortenwechsel insbesondere ein Wechsel verstanden, der notwendig die Änderung wenigstens eines Parameters erfordert.

Bei einem weiteren bevorzugten Verfahren wird ein Hinweis ausgegeben, aus dem sich ergibt, dass ein Sortenwechsel bevorsteht oder allgemein ein Hinweis der für einen Sortenwechsel charakteristisch ist. So kann beispielsweise ein Hinweis an die Maschine ausgegeben werden, dass innerhalb einer bestimmten Zeitspanne, beispielsweise in 20 Min. ein Sortenwechsel durchzuführen ist oder durchgeführt wird.

Bei einem weiteren bevorzugten Verfahren ist wenigstens ein Parameter ein für das zu behandelnde Behältnis charakteristischer Parameter und bevorzugt ist dieser Parameter aus einer Gruppe von Parametern ausgewählt, welche eine Behältnisgröße (bzw. Behältnishöhe), einen Behältnisdurchmesser, ein Behältnisvolumen, ein Behältnismaterial, eine Wandungsdicke des Behältnisses und dergleichen enthält. Somit handelt es sich hier um Parameter, welche für das herzustellende Behältnis charakteristisch sind, ggfs. jedoch auch um solche Parameter, welche für die Kunststoffvorformlinge, aus denen die Behältnisse geformt werden, charakteristisch sind.

Bei einem weiteren bevorzugten Verfahren ist wenigstens ein Parameter für die Behandlung des Behältnisses charakteristisch und bevorzugt ist dieser Parameter aus einer Gruppe von Parametern ausgewählt, welche eine Arbeitsgeschwindigkeit der Maschine, eine Erwärmungstemperatur von Kunststoffvorformlingen, eine Temperatur für einen Etikettenleim, einen Expansionsdruck für Kunststoffvorformlinge und dergleichen enthält. Damit handelt es sich bei diesen Parametern nicht um für das Behältnis spezifische Parameter, sondern um für den Behandlungsvorgang, etwa einen Streckblasvorgang der Kunststoffvorformlinge charakteristische Parameter. Vorteilhaft enthalten die Vorgabeparameter sowohl für das Behältnis bzw. die Behältnisse charakteristische Parameter als auch für die Behandlung der Behältnisse charakteristische Parameter.

Bei einem weiteren bevorzugten Verfahren fragt wenigstens eine Folgesteuerungseinrichtung die benötigten Parameter von der Hauptsteuerungseinrichtung ab.

Es wäre jedoch auch denkbar, dass die Folgesteuerungseinrichtung die benötigten Parameter direkt von dem Benutzer anfragt, dieser dann möglicherweise diese Parameter an den Folgesteuerungseinrichtungen bzw. unmittelbar an den betreffenden Behandlungseinrichtungen eingibt.

Bei einem weiteren bevorzugten Verfahren ist wenigstens eine Behandlungseinrichtung aus einer Gruppe von Behandlungseinrichtungen ausgewählt, welche Erwärmungseinrichtungen zum Erwärmen von Kunststoffvorformlingen, Sterilisationseinrichtungen zum Sterilisieren von Kunststoffvorformlingen und/oder Kunststoffbehältnissen (insbesondere Kunststoffflaschen), Umformungseinrichtungen zum Umformen von Kunststoffvorformlingen zu Kunststoffbehältnissen, Fülleinrichtungen zum Befüllen von Behältnissen, Verschließeinrichtungen zum Verschließen von Behältnissen, Etikettiereinrichtungen zum Etikettieren von Behältnissen, Druckeinrichtungen zum Bedrucken von Behältnissen, Behälterdigitaldruckmaschinen, Maschinen zum Inspizieren von Behältnissen, Verpackungsmaschinen, Pallettiermaschinen, Reinigungsmaschinen zum Reinigen von Behältnissen und dergleichen enthält.

Bei einem weiteren bevorzugten Verfahren sind wenigstens zwei der genannten Behandlungseinrichtungen miteinander geblockt, d. h. im Wesentlichen permanent hinsichtlich ihrer Arbeits- und/oder Behandlungsgeschwindigkeit aufeinander synchronisiert. Insbesondere für derartige geblockte Anlagen eignet sich das hier beschriebene Verfahren, da bei geblockten Anlagen bzw. Maschinen ohnedies eine sehr detaillierte Kommunikation zwischen den einzelnen Steuerungseinrichtungen der Behandlungseinrichtungen erfolgen muss. Bevorzugt sind mehrere Maschinen bzw. Behandlungseinrichtungen der Anlage miteinander geblockt. Die vorliegende Erfindung ist weiterhin auf eine Vorrichtung zum Behandeln von Behältnissen gerichtet. Diese Vorrichtung weist eine erste Behandlungseinrichtung auf, welche die Behältnisse in einer ersten vorgegebenen Weise behandelt. Weiterhin weist die Vorrichtung eine zweite Behandlungseinrichtung auf, welche die Behältnisse in einer zweiten vorgegebenen Weise behandelt. Weiterhin ist auch eine Transporteinrichtung vorgesehen, welche die Behältnisse von der ersten Behandlungseinrichtung zu der zweiten Behandlungseinrichtung transportiert. Dabei werden die beiden Behandlungseinrichtungen jeweils von Steuerungseinrichtungen gesteuert und die Steuerungseinrichtungen steuern die jeweiligen Behandlungseinrichtungen unter Verwendung von Parametern, die für die Behältnisse und/oder die Behandlung der Behältnisse charakteristisch sind.

Bevorzugt weist die Vorrichtung eine Hauptsteuerungseinrichtung auf, welche Vorgabeparameter an wenigstens eine Folgesteuerungseinrichtung, welche zur Steuerung wenigstens einer Behandlungseinrichtung dient, ausgibt und weiterhin weist die Vorrichtung wenigstens eine Überprüfungseinrichtung auf, welche dazu geeignet und bestimmt ist, zu prüfen, ob alle von der von dieser Folgesteuerungseinrichtung gesteuerten Behandlungseinrichtungen benötigten Parameter zumindest aus den Vorgabeparametern ableitbar sind und/oder unmittelbar durch diese vorgegeben wurden.

Es wird damit auch vorrichtungsseitig vorgeschlagen, dass die jeweiligen Folgesteuerungseinrichtungen jeweils überprüfen ob sämtliche für die von diesen Folgesteuerungseinrichtungen gesteuerten Maschinenteilen benötigten Parameter übermittelt wurden.

Bevorzugt weist die Überprüfungseinrichtung eine Speichereinrichtung auf, in der hinterlegt ist, welche Parameter für den Betrieb der jeweiligen Behandlungseinrichtung benötigt werden. Weiterhin weist die Überprüfungseinrichtung bevorzugt eine Vergleichseinrichtung auf, welche die Vorgabeparameter mit den benötigten Parametern vergleicht. Bevorzugt weist wenigstens eine Folgesteuerungseinrichtung eine Speichereinrichtung auf, in der Parameter früherer Behandlungsvorgänge an den Behältnissen hinterlegt sind.

Bevorzugt weisen die Folgesteuerungseinrichtungen eine Anfrageeinrichtung auf, welche an die Hauptsteuerungseinrichtung Anfragen stellen kann, insbesondere Anfragen stellen kann, aus denen sich ergibt, welche Parameter noch eingegeben werden müssen.

Bei einer weiteren bevorzugten Ausführungsform weist die Vorrichtung eine Anzeigeeinrichtung auf, welche dazu geeignet und bestimmt ist, Daten, welche für derartige Anfragen der Folgesteuerungseinrichtungen charakteristisch sind, auszugeben.

Bei einer weiteren bevorzugten Ausführungsform steuert die Hauptsteuerungseinrichtung wenigstens eine Behandlungseinrichtung. Damit ist bevorzugt die Hauptsteuerungseinrichtung zur Steuerung einer Behandlungseinrichtung, wie etwa einer Fülleinrichtung oder einer Blasformeinrichtung bestimmt. Es wäre jedoch auch möglich, dass es sich bei der Hauptsteuerungseinrichtung um eine übergeordnete Maschinensteuerungseinrichtung handelt.

Weitere Vorteile und Ausführungsformen ergeben sich aus den beigefügten Zeichnungen. Darin zeigen:
- Fig. 1: eine schematische Darstellung einer erfindungsgemäßen Vorrichtung zum Behandeln von Behältnissen;
- Fig. 2: eine schematische Darstellung zur Veranschaulichung der Erfindung; und
- Fig. 3: ein schematisches Ablaufdiagramm für ein erfindungsgemäßes Verfahren.

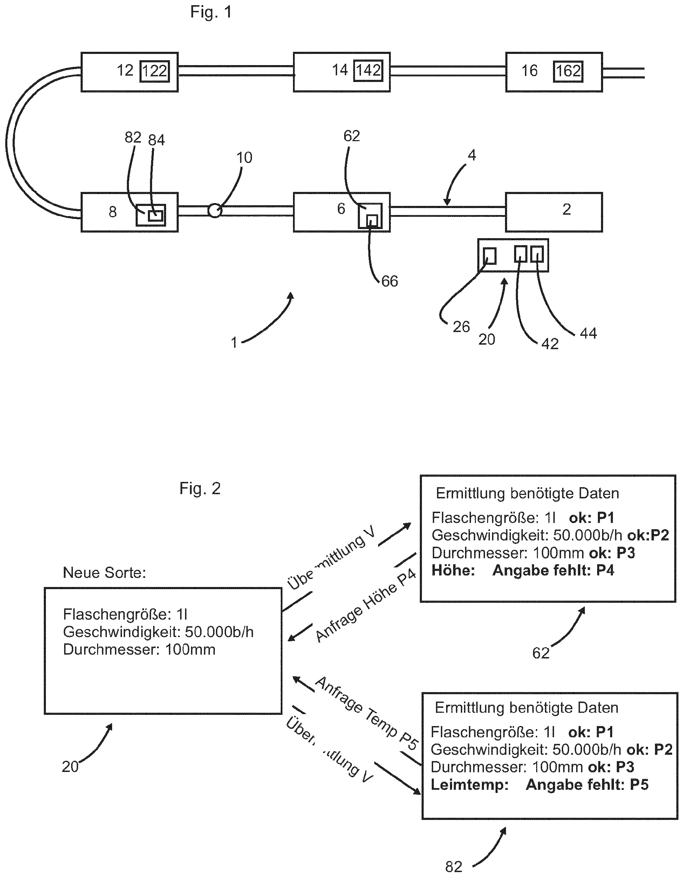

Figur 1 zeigt eine schematische Darstellung einer erfindungsgemäßen Vorrichtung 1 zum Behandeln von Behältnissen. Diese Vorrichtung 1 weist hier eine Vielzahl von Behandlungseinrichtungen 2, 6, 8, 12, 14, 16 auf. Durch diese Behandlungseinrichtungen werden die Behältnisse 10 sukzessiv gefördert und dort in unterschiedlicher Weise behandelt. So kann es sich beispielsweise bei der Behandlungseinrichtung 2 um eine Erwärmungseinrichtung bzw. einen Ofen handeln, der Kunststoffvorformlinge erwärmt. Anschließend können die so erwärmten Kunststoffvorformlinge in einer weiteren Behandlungseinrichtung 6 beispielsweise sterilisiert werden. Dabei ist es möglich, dass diese Sterilisationseinrichtung 6 eine Innenwandung der Kunststoffvorformlinge etwa mittels elektromagnetischer Strahlung bzw. Elektronen sterilisiert.

Im Anschluss an diese zweite Behandlungseinrichtung folgt eine weitere Behandlungseinrichtung 8, bei der es sich beispielsweise um eine Umformungseinrichtung zum Umformen der Kunststoffvorformlinge zu Kunststoffbehältnissen handeln kann. An diese Umformungseinrichtung 8 kann sich eine Fülleinrichtung 12 anschließen, welche die Kunststoffbehältnisse mit einer Flüssigkeit und insbesondere einem Getränk befüllt. Das Bezugszeichen 14 kann hier eine Verschließeinrichtung darstellen, welche die Kunststoffvorformlinge verschließt. Schließlich kann eine Vielzahl von Kunststoffbehältnissen noch mit einer Behandlungseinrichtung 16 zu Gebinden zusammengestellt werden.

Das Bezugszeichen 4 kennzeichnet eine Transporteinrichtung, welche zum Transportieren der Behältnisse, insbesondere von einer Behandlungseinrichtung zu einer sich anschließenden Behandlungseinrichtung dient. Bevorzugt können dabei diese Transporteinrichtungen 4 als Transportsterne ausgebildet sein, welche die Kunststoffvorformlinge bzw. Behältnisse 10 fördern. Auch diese Transporteinrichtung(en) kann/können dabei jeweils Steuerungseinrichtungen aufweisen, welchen Parameter übergeben werden, etwa Paramater für eine Tragringquerschnitt der Behältnisse oder für eine Höhe der Behältnisse oder auch Parameter für eine Arbeitsgeschwindigkeit der Vorrichtung 1.

Bei einer Sortenumstellung hat bislang im Stand der Technik der Benutzer in jede einzelne der genannten Behandlungseinrichtungen die relevanten zu ändernden Parameter eingegeben. Die Erfindung schlägt nunmehr eine einfachere Vorgehensweise vor. So weisen die einzelnen Behandlungseinrichtungen jeweils Folgesteuereinrichtungen 62, 82, 122, 142,162 auf. Diese Folgesteuereinrichtungen stehen in Kommunikationsverbindung mit einer Hauptsteuerungseinrichtung 20 (welche bei dem hier gezeigten Beispiel auch zur Steuerung der Erwärmungseinrichtung dient). In diese Hauptsteuerungseinrichtung 20 kann der Benutzer über eine Eingabeeinrichtung 42 etwa für einen Sortenwechsel benötigte geänderte Daten d.h. Parameter eingeben. Diese eingegebenen Daten werden auch an die weiteren Folgesteuerungseinrichtungen 62, 82 ... kommuniziert. Das Bezugszeichen 44 bezieht sich auf eine Anzeigeeinrichtung, beispielsweise ein Display, über das an den Benutzer Informationen ausgegeben werden können, etwa eine Anfrage nach noch einzugebenden Parametern.

Sollten die vom Benutzer eingegebenen Daten nicht ausreichend sein, kann jede der Folgesteuerungseinrichtungen 62, 82 ... fehlende Daten bei der Hauptsteuerungseinrichtung 20 anfragen. Daraufhin kann der Benutzer die noch fehlenden Daten eingeben und diese können wiederum an alle Folgesteuerungseinrichtungen 62, 82 ... bzw. alle Maschinen ausgegeben werden. Zu diesem Zweck weisen die einzelnen Folgesteuerungseinrichtungen 62, 82 ... jeweils Überprüfungseinrichtungen 84 (nur eine gezeigt) auf, welche überprüfen, ob die Vorgabeparameter vollständig sind. Das Bezugszeichen 66 kennzeichnet eine Kommunikationseinrichtung, mittels derer die Folgesteuerungseinrichtung 6 mit einer Kommunikationseinrichtung 26 der Hauptsteuerungseinrichtung 20 - insbesondere bidirektional - kommunizieren kann.

Figur 2 zeigt eine schematische Darstellung zur Veranschaulichung der Erfindung. Dabei werden über die Hauptsteuerungseinrichtung 20 Daten d.h. Parameter eingegeben, wie etwa eine Flaschengröße, eine Arbeitsgeschwindigkeit und ein Durchmesser der Behältnisse. Diese Daten werden als Vorgabeparameter V hier an zwei weitere Folgesteuerungseinrichtungen 62 und 82 kommuniziert. Diese Kommunikation kann dabei drahtlos oder auch über eine Kabelverbindung erfolgen. Die jeweiligen Folgesteuerungseinrichtungen 62 und 82 ermitteln für ihren Betrieb benötigte Daten bzw. Parameter P1, P2, ... Pn.

Dabei handelt es sich beispielsweise um die Flaschengröße (P1), welche bereits kommuniziert wurde. Auch die Arbeitsgeschwindigkeit (P2) kann von der Folgesteuerungseinrichtung 62 für den Betrieb benötigt werden und auch der Durchmesser (P3) des Behältnisses. Allerdings benötigt die Folgesteuerungseinrichtung 62 bzw. die Behandlungseinrichtung 6, der diese Folgesteuerungseinrichtung 62 zugeordnet ist, noch Angaben über die Höhe des Behältnisses (P4). Infolgedessen fragt die Folgesteuerungseinrichtung 62 die Höhe wiederum von der Hauptsteuerungseinrichtung 20 an.

Entsprechend kann beispielsweise der Folgesteuerungseinrichtung 82 noch die Angabe über eine Temperatur des Etikettenleims fehlen. Auch diese Anfrage kann wiederum an die Hauptsteuerungseinrichtung gestellt werden. Dabei ist es möglich, dass die Hauptsteuerungseinrichtung 20 sämtliche fehlenden Daten sammelt und an den Benutzer die Anweisung ausgibt, diese Daten noch zu ergänzen. Wenn diese Daten ergänzt wurden, können sämtliche Folgesteuerungseinrichtungen mit diesen Daten versorgt werden.

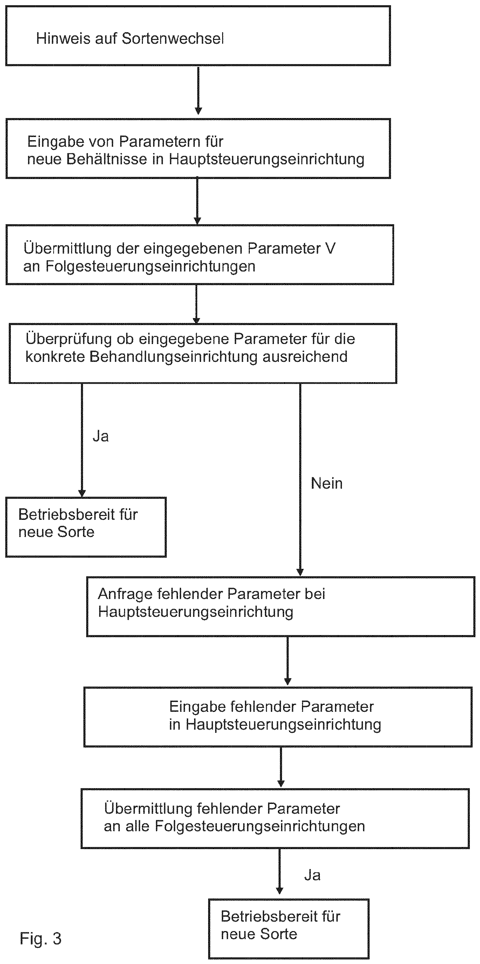

Figur 3 zeigt ein Ablaufdiagramm für ein erfindungsgemäßes Verfahren. Zunächst wird beispielsweise durch den Benutzer ein Hinweis auf einen Sortenwechsel eingegeben. Anschließend werden Parameter für neue Behältnisse in der Hauptsteuerungseinrichtung eingegeben. Diese Parameter werden bevorzugt als Vorgabeparameter V an sämtliche Folgesteuerungseinrichtungen der weiteren Behandlungseinrichtungen kommuniziert bzw. übermittelt. Die einzelnen Folgesteuerungseinrichtungen überprüfen, ob die eingegebenen Parameter für die konkrete Behandlungseinrichtung ausreichend sind. Sollte dies der Fall sein, ist die jeweilige Behandlungseinrichtung betriebsbereit für die neue Sorte.

Sollte dies nicht der Fall sein, werden fehlende Parameter insbesondere bei der Hauptsteuerungseinrichtung angefragt. Dabei werden die eingegebenen Parametersätze mit den benötigten Parametersätzen verglichen. Alternativ wäre es auch möglich, dass die fehlenden Parameter von der Folgesteuerungseinrichtung selbst ermittelt, etwa auf Basis früher verwendeter Datensätze.

In einem weiteren Verfahrensschritt werden fehlende Parameter in die Hauptsteuerungseinrichtung eingegeben und wiederum werden diese fehlenden Parameter an wenigstens eine und bevorzugt alle Folgesteuerungseinrichtungen übermittelt. Nunmehr sind sämtliche Behandlungseinrichtungen betriebsbereit für die neue Sorte.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2, 6, 8, 12, 14, 16: Behandlungseinrichtungen
- 4: Transporteinrichtung
- 10: Behältnisse
- 20: Hauptsteuerungseinrichtung
- 26: Kommunikationseinrichtung
- 42: Eingabeeinrichtung
- 44: Anzeigeeinrichtung
- 62, 82, 122, 142, 162: Folgesteuerungseinrichtung
- 66: Kommunikationseinrichtung
- 84: Überprüfungseinrichtung
- V: Vorgabeparameter
- P1 - P5: benötigte Parameter

## Patentansprüche

1. Verfahren zum Behandeln von Behältnissen (10), wobei die Behältnisse (10) mittels einer ersten Behandlungseinrichtung (2) in einer ersten vorgegebenen Weise behandelt werden und mittels einer Transporteinrichtung (4) zu einer zweiten Behandlungseinrichtung (6) transportiert werden und von dieser zweiten Behandlungseinrichtung (6) in einer zweiten vorgegebenen Weise behandelt werden und wobei die Behandlungseinrichtungen (2, 6) jeweils von Steuerungseinrichtungen (20, 62, 82, 122, 142, 162) gesteuert werden, wobei zur Steuerung Parameter verwendet werden, welche für die Behältnisse (10) und/oder die Behandlung der Behältnisse (10) charakteristisch sind,
**dadurch gekennzeichnet, dass**
Vorgabeparameter (V) an wenigstens eine und bevorzugt eine Vielzahl der Steuerungseinrichtungen (62, 82, 122, 142, 162) ausgegeben werden und diese ausgegebenen Vorgabeparameter (V) mit von wenigstens einer Behandlungseinrichtung benötigten Parametern (P1, P2, P3 . . . Pn) verglichen werden und geprüft wird, ob die von der wenigstens einen Behandlungseinrichtung (6, 8, 12, 14, 16) benötigten Parameter zumindest aus den Vorgabeparametern (V) ableitbar sind wobei benötigte Parameter (P2), welche nicht aus den Vorgabeparametern ableitbar sind, angefragt werden und die angefragten Parameter an mehrere und bevorzugt alle Behandlungseinrichtungen (6, 8, 12, 14, 16) ausgegeben werden.

2. Verfahren nach Anspruch 1,
**dadurch gekennzeichnet, dass**
die Vorgabeparameter (V) zur Durchführung eines Behandlungswechsels und insbesondere eines Sortenwechseis ausgegeben werden.

3. Verfahren nach wenigstens einem der vorangegangenen Ansprüche,
**dadurch gekennzeichnet, dass**
wenigstens ein Parameter ein für das zu behandelnde Behältnis charakteristischer Parameter ist und bevorzugt dieser Parameter aus einer Gruppe von Parametern ausgewählt ist, welche eine Behältnishöhe, einen Behältnisdurchmesser, ein Behältnisvolumen, ein Behältnismaterial, und eine Wandungsdicke des Behältnisses enthält.

4. Verfahren nach wenigstens einem der vorangegangenen Ansprüche,
**dadurch gekennzeichnet, dass**
wenigstens ein Parameter für die Behandlung des Behältnisses charakteristisch ist und bevorzugt aus einer Gruppe von Parametern ausgewählt ist, welche eine Arbeitsgeschwindigkeit der Maschine, eine Erwärmungstemperatur von Kunststoffvorformlingen, eine Temperatur für einen Etikettenleim, einen Druck, eine Temperatur und dergleichen enthält.

5. Verfahren nach wenigstens einem der vorangegangenen Ansprüche,
**dadurch gekennzeichnet, dass**
wenigstens eine Folgesteuerungseinrichtung (62, 82, 122, 142, 162) die benötigten Parameter von der Hauptsteuerungseinrichtung (20) abfragt.

6. Verfahren nach wenigstens einem der vorangegangenen Ansprüche,
**dadurch gekennzeichnet, dass**
wenigstens eine Behandlungseinrichtung aus einer Gruppe von Behandlungseinrichtungen ausgewählt ist, welche Erwärmungseinrichtungen zum Erwärmen von Kunststoffvorformlingen, Sterilisationseinrichtungen zum Sterilisieren von Kunststoffvorformlingen und/oder Kunststoffbehältnissen, Umformungseinrichtungen zum Umformen von Kunststoffvorformlingen zu Kunststoffbehältnissen, Fülleinrichtungen zum Befüllen von Behältnissen, Verschließeinrichtungen zum Verschließen von Behältnissen, Etikettiereinrichtungen zum Etikettieren von Behältnissen, Druckeinrichtungen zum Bedrucken von Behältnissen und dergleichen enthält.

7. Vorrichtung (1) zum Behandeln von Behältnissen (10), mit einer ersten Behandlungseinrichtung (2), welche die Behältnisse (10) in einer ersten vorgegebenen Weise behandelt, mit einer zweiten Behandlungseinrichtung (6), welche die Behältnisse (10) in einer zweiten vorgegebenen Weise behandelt und mit einer Transporteinrichtung (4), welche die Behältnisse (10) von der ersten Behandlungseinrichtung (2) zu der zweiten Behandlungseinrichtung (6) transportiert, wobei die beiden Behandlungseinrichtungen (2, 6) jeweils von Steuerungseinrichtungen (20, 62, 82) gesteuert werden, und die Steuerungseinrichtungen die Behandlungseinrichtungen (2, 6) unter Verwendung von Parametern steuern, die für die Behältnisse (10) und/oder die Behandlung der Behältnisse (10) charakteristisch sind,
**dadurch gekennzeichnet, dass**
die Vorrichtung eine Hauptsteuerungseinrichtung (20) aufweist, welche Vorgabeparameter an wenigstens eine Folgesteuerungseinrichtung (62), welche zur Steuerung wenigstens einer Behandlungseinrichtung (6) dient, ausgibt und die Vorrichtung wenigstens eine Überprüfungseinrichtung (84) aufweist, welche dazu geeignet und bestimmt ist, zu prüfen, ob alle von der von dieser Folgesteuerungseinrichtung (62) gesteuerten Behandlungseinrichtung benötigten Parameter (P1, P2 . . . Pn) zumindest aus den Vorgabeparametern (V) ableitbar sind wobei benötigte Parameter (P2), welche nicht aus den Vorgabeparametern ableitbar sind, angefragt werden und die angefragten Parameter an mehrere und bevorzugt alle Behandlungseinrichtungen (6, 8, 12, 14, 16) ausgegeben werden.

8. Vorrichtung (1) nach Anspruch 7,
**dadurch gekennzeichnet, dass**
die Hauptsteuerungseinrichtung (20) wenigstens eine Behandlungseinrichtung (2) steuert.

## Claims

1. Method for processing containers (10), wherein the containers (10) are processed by means of a first processing device (2) in a first predetermined manner and are transported by means of a transport device (4) to a second processing device (6) and are processed by this second processing device (6) in a second predetermined manner, and wherein the processing devices (2, 6) are in each case controlled by control devices (20, 62, 82, 122, 142, 162), wherein for the control parameters are used which are characteristic of the containers (10) and/or the processing of the containers (10),
**characterised in that**
predetermination parameters (V) are output on at least one and preferably on a plurality of the control devices (62, 82, 122, 142, 162), and these output predetermination parameters (V) are compared with parameters (P1, P2, P3 ... Pn) required by at least one processing device, and it is checked whether the parameters required by the at least one processing device (6, 8, 12, 14, 16) can be derived at least from the predetermination parameters (V), wherein required parameters (P2) which cannot be derived from the predetermination parameters are requested and the requested parameters are output to several and preferably all processing devices (6, 8, 12, 14, 16).

2. Method according to claim 1,
**characterised in that**
the predetermination parameters (V) are output for carrying out a change of processing and in particular a change of type.

3. Method according to at least one of the preceding claims,
**characterised in that**
at least one parameter is a parameter which is characteristic for the container to be processed and preferably this parameter is selected from a group of parameters which includes a container height, a container diameter, a container volume, a container material, and a wall thickness of the container.

4. Method according to at least one of the preceding claims,
**characterised in that**
at least one parameter is a parameter which is characteristic for the processing of the container, and preferably this parameter is selected from a group of parameters which includes a working speed of the machine, a heating temperature of plastics material parisons, a temperature for a label glue, a pressure, a temperature and the like.

5. Method according to at least one of the preceding claims,
**characterised in that**
at least one sequence control device (62, 82, 122, 142, 162) requests the required parameters from the main control device (20).

6. Method according to at least one of the preceding claims,
**characterised in that**
at least one processing device is selected from a group of processing devices which includes heating devices for heating plastics material parisons, sterilising devices for sterilising plastics material parisons and/or plastics material containers, transforming devices for transforming plastics material parisons into plastics material containers, filling devices for filling containers, closure devices for closing containers, labelling devices for labelling containers, printing devices for printing containers and the like.

7. Apparatus (1) for processing containers (10), comprising a first processing device (2), which processes the containers (10) in a first predetermined manner and with a transport device (4), which transports the containers (10) from the first processing device (2) to the second processing device (6), wherein both processing devices (2, 6) are controlled by the control devices (20, 62, 82) respectively, and the control devices control the processing devices (2, 6) by using parameters which are characteristic of the containers (10) and/or the processing of the containers (10),
**characterised in that**
the apparatus has a main control device (20), which outputs predetermination parameters to at least one sequence control device (62) which serves for controlling at least one processing device (6), and the apparatus has at least one checking device (84), which is suitable and intended for checking whether all parameters (P1, P2 ...Pn) required by the processing device controlled by this sequence control device (62) can at least be derived from the predetermination parameters (V), wherein required parameters (P2) which cannot be derived from the predetermination parameters are requested and the requested parameters are output to several and preferably all processing devices (6, 8, 12, 14, 16).

8. Apparatus (1) according to claim 7,
**characterised in that**
the main control device (20) controls at least one processing device (2).

## Revendications

1. Procédé de traitement de contenants (10), dans lequel les contenants (10) sont traités d'une première manière prédéterminée au moyen d'un premier dispositif de traitement (2) et sont transportés vers un deuxième dispositif de traitement (6) au moyen d'un dispositif de transport (4) et sont traités d'une deuxième manière prédéterminée au moyen du deuxième dispositif de traitement (6) et dans lequel les dispositifs de traitement (2, 6) sont chacun commandés par des dispositifs de commande (20, 62, 82, 122, 142, 162), dans lequel des paramètres qui sont caractéristiques des contenants (10) et/ou du traitement des contenants (10) sont utilisés pour la commande,
**caractérisé en ce que**
les paramètres par défaut (V) sont transmis à au moins un et de préférence une pluralité des dispositifs de commande (62, 82, 122, 142, 162) et ces paramètres par défaut (V) transmis sont comparés aux paramètres (P1, P2, P3 ... Pn) requis par au moins un dispositif de traitement et il est vérifié si les paramètres requis par l'au moins un dispositif de traitement (6, 8, 12, 14, 16) peuvent être dérivés au moins des paramètres par défaut (V), dans lequel les paramètres requis (P2) qui ne peuvent pas être dérivés des paramètres par défaut sont demandés et les paramètres demandés sont transmis à plusieurs et de préférence tous les dispositifs de traitement (6, 8, 12, 14, 16).

2. Procédé selon la revendication 1,
**caractérisé en ce que**
les paramètres par défaut (V) sont transmis pour effectuer un changement de traitement et en particulier un changement de sorte.

3. Procédé selon au moins l'une des revendications précédentes,
**caractérisé en ce que**
au moins un paramètre est un paramètre caractéristique du contenant à traiter et ce paramètre est de préférence choisi dans un groupe de paramètres comprenant une hauteur de contenant, un diamètre de contenant, un volume de contenant, un matériau de contenant et une épaisseur de paroi du contenant.

4. Procédé selon au moins l'une des revendications précédentes,
**caractérisé en ce que**
au moins un paramètre est caractéristique du traitement du contenant et est de préférence choisi dans un groupe de paramètres comprenant une vitesse de travail de la machine, une température de chauffage de préformes en plastique, une température pour une colle d'étiquette, une pression, une température et similaires.

5. Procédé selon au moins l'une des revendications précédentes,
**caractérisé en ce que**
au moins un dispositif de commande séquentielle (62, 82, 122, 142, 162) interroge les paramètres requis à partir du dispositif de commande principal (20).

6. Procédé selon au moins l'une des revendications précédentes,
**caractérisé en ce que**
au moins un dispositif de traitement est sélectionné dans un groupe de dispositifs de traitement comprenant des dispositifs de chauffage pour chauffer des préformes en plastique, des dispositifs de stérilisation pour stériliser des préformes en plastique et/ou des contenants en plastique, des dispositifs de formage pour former des préformes en plastique en des contenants en plastique, des dispositifs de remplissage pour remplir des contenants, des dispositifs de fermeture pour fermer des contenants, des dispositifs d'étiquetage pour étiqueter des contenants, des dispositifs d'impression pour l'impression sur des contenants et similaires.

7. Dispositif (1) de traitement de contenants (10), avec un premier dispositif de traitement (2) qui traite les contenants (10) d'une première manière prédéterminée, avec un deuxième dispositif de traitement (6) qui traite les contenants (10) d'une deuxième manière prédéterminée, et avec un dispositif de transport (4) qui transporte les contenants (10) du premier dispositif de traitement (2) au deuxième dispositif de traitement (6), dans lequel les deux dispositifs de traitement (2, 6) sont chacun commandés par des dispositifs de commande (20, 62, 82) et les dispositifs de commande commandent les dispositifs de traitement (2, 6) à l'aide de paramètres caractéristiques des contenants (10) et/ou du traitement des contenants (10),
**caractérisé en ce que**
le dispositif présente un dispositif de commande principal (20) qui transmet des paramètres par défaut à au moins un dispositif de commande séquentielle (62) qui est utilisé pour commander au moins un dispositif de traitement (6) et le dispositif présente au moins un dispositif de contrôle (84) adapté et destiné à vérifier si tous les paramètres (P1, P2 ... Pn) requis par le dispositif de traitement commandé par le dispositif de contrôle séquentiel (62) peuvent être dérivés au moins des paramètres par défaut (V), dans lequel les paramètres requis (P2) qui ne peuvent pas être dérivés des paramètres par défaut sont demandés et les paramètres demandés sont transmis vers plusieurs et de préférence tous les dispositifs de traitement (6, 8, 12, 14, 16).

8. Dispositif (1) selon la revendication 7,
**caractérisé en ce que**
le dispositif de commande principal (20) commande au moins un dispositif de traitement (2).
